# EUROPEAN PATENT SPECIFICATION

(11) **EP 0 507 560 B1**
(45) Date of publication and mention of the grant of the patent: **30.08.1995**
(21) Application number: 92302849.2
(22) Date of filing: 31.03.1992
(51) Int. Cl.: B23H 7/20

(54) **Electric discharge machines**
Funkenerosionsmaschine
Machines d'usinages par électro-érosion

(30) Priority: 01.04.1991 JP 94715/91
(43) Date of publication of application: 07.10.1992
(73) Proprietor: SODICK CO., LTD., Yokohama Kanagawa 222 (JP)
(72) Inventor: Kaneko, Yuji, Yokohama-shi, Kanagawa 241 (JP); Nabekura, Nobuyoshi, Sakai-gun, Fukui 910-02 (JP)
(74) Representative: Kensett, John Hinton

(56) References cited:
- DE-A- 4 029 578
- PATENT ABSTRACTS OF JAPAN vol. 12, no. 41 (M-666)(2888) 6 February 1988 & JP-A-62 193 728 (MITSUBISHI ELECTRIC CORP) 25 August 1987
- PATENT ABSTRACTS OF JAPAN vol. 11, no. 25 (M-556)(2472) 23 January 1987 & JP-A-61 197 123 (MITSUBISHI ELECTRIC CORP) 1 September 1986

## Description

This invention relates to electric discharge machines, in particular it relates to an adaptive control method and apparatus for controlling the machining current in an electric discharge machine. More specifically, the present invention relates to an adaptive control method and apparatus for specifying the waveform of discharge current accurately and controlling the machining current pulse by setting the OFF time of a pulse even when the setting of the peak current value of the discharge current is changed.

In electric discharge machines, electric discharge machining may be performed with cumulative electric discharge craters formed by inducing pulses of discharge current at a high frequency. An electrode is positioned in an opposing relationship to a workpiece to be machined across a gap of microns for example via a machining liquid such as kerosene or water. This pulsed discharge current has nearly constant peak value and a pulse width repeating ON state and OFF state under the predetermined machining condition. The pulsed discharge current must be optimised in accordance with material, hardness of the workpiece and discharging state at the machining gap, for example.

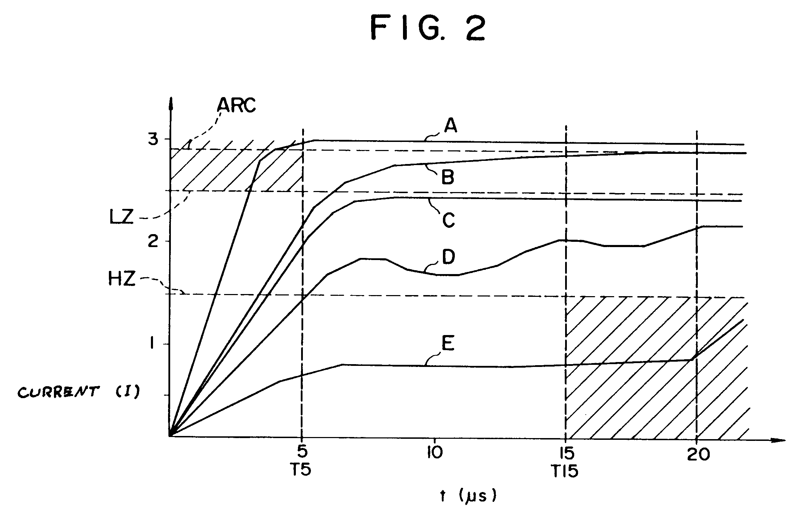

In general, the discharge current waveform across the gap formed between the electrode and the workpiece varies according to the state in the gap as shown in Figure 2. For instance, when the machining liquid is decomposed into gas, tar and carbon and the decomposition products or metal sludges begin to intervene across the gap, concentrated discharging during the electric discharge machining reduces the impedance across the gap and leads to the first discharge waveform having a fairly sharp rising edge and subsequent constant current level. Thus, the insufficient recovery of dielectric across the gap after a discharge current pulse may induce concentrated discharging and constant arc discharge which tends to damage machining electrodes and workpieces. Contrary to expectation, to increase the machining current for an improved machining rate by shortening the OFF time of the pulse, the machining rate is reduced due to constant arc discharge. Concentrated discharging when less products lie across the gap leads to the second discharge waveform having a relatively favourable rising edge not involved in the area shown by a slanting line. A discharge waveform between LZ level for detecting low impedance and HZ level for detecting high impedance during discharging time indicates a stable discharging state, as the third and fourth waveforms shown. Further, when discharging is made via an impurity of high impedance, the fifth discharge waveform does not reach the HZ level.

When occurrence of the first or the fifth waveform involved in the area shown by a slanting line is detected, it is required to reduce machining current by greatly extending the OFF time or to rapidly stop the machining operation. Further, when the occurrence of a waveform reaching ARC level like the third waveform is detected, it is required to extend the OFF time of the pulse to prevent the unstable discharging state. Additionally, when the occurrence of a favourable waveform like the third or the fourth waveform is detected, the OFF time of the pulse may preferably be shortened.

The first to fifth discharge waveforms correspond to waveform A-E into Figure 2 which are described later, although the levels of discharge current may be different from that in Figure 2. The HZ level, the LZ level and the ARC level in Figure 2 are detecting levels against which the waveform of discharge current is compared.

To control discharge current, an electric machining apparatus has been disclosed in JP-B 47-50276. In this apparatus, the detector detects a change of a gap voltage only during discharging time. In one embodiment, this detector comprises a resistor connected in series with a machining electrode and a workpiece for sensing that start of spark discharging, a transistor which responds to the start of spark discharging and a resistor connected in parallel with a gap to detect a gap voltage at a certain portion of each discharge pulse. In another embodiment this detector comprises a resistor connected in series with a machining electrode and a workpiece for sensing the start of spark discharging, two transistors which responds to the start of spark discharging and two resistors connected in parallel with a gap and parallel to each other to detect a gap voltage at a certain two portions of each discharge pulse.

Other examples of the conventional controller are those shown in JP-A 47-13795 and JP-A 51-119597. The former is designed to detect a voltage variation slope, a mean voltage level and a high frequency component as a detected signal according to a gap voltage, only during discharging time and to extract more than two detected signals out of three. The extracted detected signals are used to display the machining state or used as a control signal for controlling the pulse generator or a servo device. The latter discloses a control method in which the discharge pulses repeated across the machining gap are detected to decide the machining state based on multiple groups of the discharge pulses and to produce a control signal digitally. A gap control device is disclosed which comprises a discriminator for discriminating discharge pulses repeated across the machining gap, a counter for counting the discriminated results and a control signal generator for generating a gap control signal to increase or decrease the gap distance when the count equals the reference value.

To control machining current more accurately, it is preferable to detect the waveform of the total discharging current. However, this is difficult since detecting must be changed greatly when the setting of the machining conditions, especially peak current, is changed according to machining needs.

When the discharge current is controlled by measuring the total discharge current, the detection level must be changed according to the selected peak value.

An object of the present invention is to provide an adaptive control method and apparatus for specifying the waveform of a discharge current accurately and controlling the machining current by suitably setting the OFF time of a pulse even when the setting of the peak current value of the discharge current is changed.

According to the present invention there is provided an adaptive control apparatus for controlling a discharge current through a gap formed between an electrode and a workpiece in an electric discharge machine having a circuit for applying a voltage pulse having an on-time and an off-time across said gap, characterised by: a monitoring circuit, including means for generating a detecting current for monitoring the discharge current; reference level generating means for generating at least a first and a second current reference level, clock means for generating at least a first and a second reference sampling time during said voltage pulse; comparing means connected to said monitoring circuit for comparing the level of said discharge current at least with said first reference level at said first reference time and with said second reference level at said second reference time and for generating respective comparison output signals; detecting means connected to the comparing means for receiving said comparison output signals and for providing at least a first predetermined output if a first predetermined set of conditions, determined by the comparison output signals, is present, and to provide a second predetermined output if a second predetermined set of conditions is present, and; control means, connected to receive said at least first or second predetermined outputs and connected to the voltage pulse applying circuit to increase the off-time when said first output is received and for decreasing said off-time when said second output is received.

In one example, the apparatus is adapted to decide whether a high impedance state exists or not at 5 microseconds after the start of spark discharging, whether a low impedance state exists or not at 15 microseconds after the start of spark discharging and whether an arc discharge state exists or not at the half time of discharge current pulse.

According to the present invention in a second aspect there is provided an adaptive control method for controlling a discharge current through a gap formed between an electrode and a workpiece in an electric discharge machine in which a voltage pulse having an on-time and an off-time is applied across said gap, characterized by the steps of: (a) monitoring a discharge current passed through said gap; (b) comparing the level of said discharge current at least two predetermined times during said voltage pulse with at least two predetermined reference levels and thereby generating comparison output signals; (c) selecting whether the discharge current falls into at least a first state or a second state based upon said comparison output signals; and (d) increasing the off-time when said current is considered to be in said first state and decreasing said off-time when said current is considered to be in said second state.

Embodiments of the invention will now be described, by way of example only, with reference to the accompanying drawings, in which:
Figure 1 is a block diagram showing an adaptive controller for an electric discharge machine in an embodiment of the present invention;
Figure 2 is a timing chart showing various discharge current pulses for different states of impurities within the spark gap of the system shown in Figure 1;
Figure 3 is a block diagram showing the ON/OFF controller of the adaptive controller shown in Figure 1;
Figure 4 is a timing chart showing the input signals and output signals to explain the operation of the ON/OFF controller shown in Figure 3;
Figure 5 is a logic circuit diagram showing the peak current controller of the adaptive controller shown in Figure 1;
Figure 6 is a block diagram showing the clock controller of the adaptive controller embodiment shown in Figure 1;
Figure 7 is a timing chart showing the input signals and output signals to explain the operation of the clock controller shown in Figure 6;
Figure 8 is a block diagram showing the detecting circuit of the adaptive controller shown in Figure 1;
Figure 9 is a logic circuit diagram showing the discharge detector of the detecting circuit shown in Figure 8;
Figure 10 is a timing chart showing the input signals and output signals to explain the operation of the discharge detector shown in Figure 9;
Figure 11 is a chart showing the detection level which corresponds to the different peak current on the basis of experimental data;
Figure 12 is a flowchart showing signal processing of the adaptive controller in an embodiment of the invention by focusing on operations of the discharge detector;
Figure 13 is a graph showing reduction of machining time by the adaptive controller shown in Figure 1 compared with that of a conventional controller;
Figure 14 is a flat view showing the arc craters or stains on the finished surface of a workpiece when the conventional adaptive controller is used; and
Figure 15 is a flat view showing the satisfactory finished surface of a workpiece when the adaptive controller shown in Figure 1 is used.

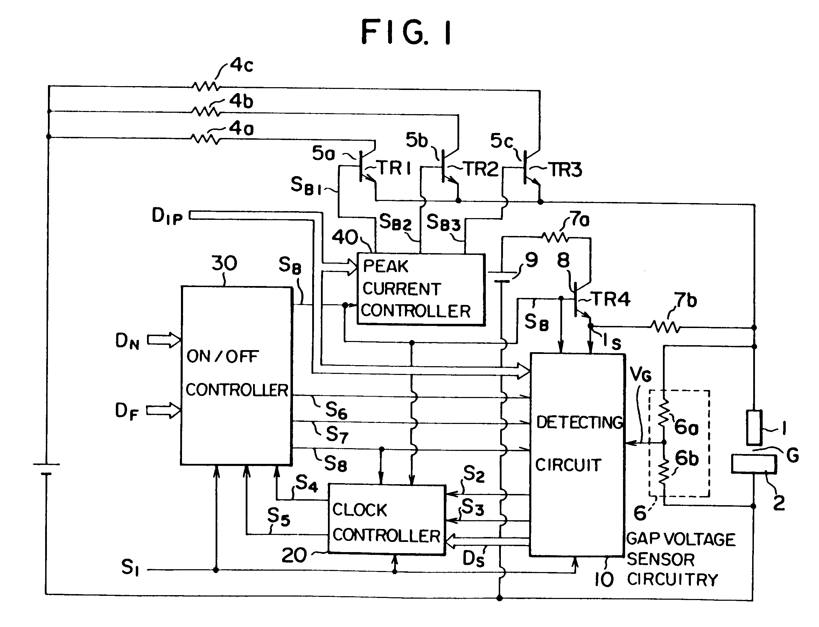

In Figure 1, the reference numeral "1" indicates a machining electrode for electric discharge machining. The electrode 1 is mounted in opposed relation to a workpiece 2 through the gap G of specified distance. In order to supply the machining current, a first circuit is provided. The first circuit comprises a first power source 3, current limiting resistors 4a, 4b and 4c, switching transistors 5a, 5b and 5c, and the gap G formed between the electrode 1 and the workpiece 2. On the opposite side of the gap G, the electrode 1 and the workpiece 2 are connected in series through the first power source 3. The current limiting resistors 4a, 4b and 4c giving a different current value are connected in parallel between the electrode 1 and the first power source 3. The switching transistors 5a, 5b and 5c are connected in parallel to each other between the respective resistor 4a, 4b and 4c and the electrode 1.

Gap voltage sensor circuitry 6 is connected in parallel with the series circuit of the electrode 1, the workpiece 2 and the first power source 3. The gap voltage sensor circuitry 6 consists of the resistors 6a and 6b which branch a gap voltage.

In order to indirectly monitor the waveform of discharge current flowing across the gap G, a second circuit connected in parallel with the gap voltage sensor circuitry 6 is provided. The second circuit comprises a second DC power source 9, current limiting resistor 7a, fourth switching transistor 8, detecting resistor 7b, and the gap G. The second DC power source 9 is connected between the limiting resistor 7a and the workpiece 2. Base voltage and emitter output of NPN type transistor 8 are supplied to the detecting circuit 10 for producing various signals. Further, the detecting circuit 10 receives ON command data DN, OFF command data DF, gap voltage VG branched by the resistance 6a and 6b of said gap voltage sensor circuitry 6 and the clock signal S1.

A detecting circuit 10 generates a signal S2 and a spark signal S3 which are supplied to the clock controller 20 together with the data DS. The clock controller 20 generates the ON clock signal S4 and the OFF clock signal S5 based on the signal S1, the signal S2 and the spark signal S3. The ON/OFF controller 30 receives the signal S4 and the signal S5. The base signal SB, which is one of the control outputs of the ON/OFF controller 30, is supplied to the base of the fourth transistor 8 causing the transistor 8 to turn ON. Also, the base signal SB is supplied to the peak current controller 40. The output of the peak current controller is supplied to the respective base of the switching transistor 5a, 5b and 5c whereby the various peak values of discharge current are selected in this embodiment.

Further, the peak current data DIP is supplied to the peak current controller 40 and the detecting circuit 10. In addition to the base signal SB, the ON/OFF controller 30 generates and supplies ON half signal S6, the ON end signal S8 and the OFF end signal S7 to the detecting circuit 10. Additionally, the base signal S8 is supplied to the clock controller 20.

In Figure 2, the different waveforms of the current flowing at a junction point between the emitter of the transistor 8 and detecting resistor 7b corresponds to the different discharging state after the start of the spark discharging. The waveforms are explained above.

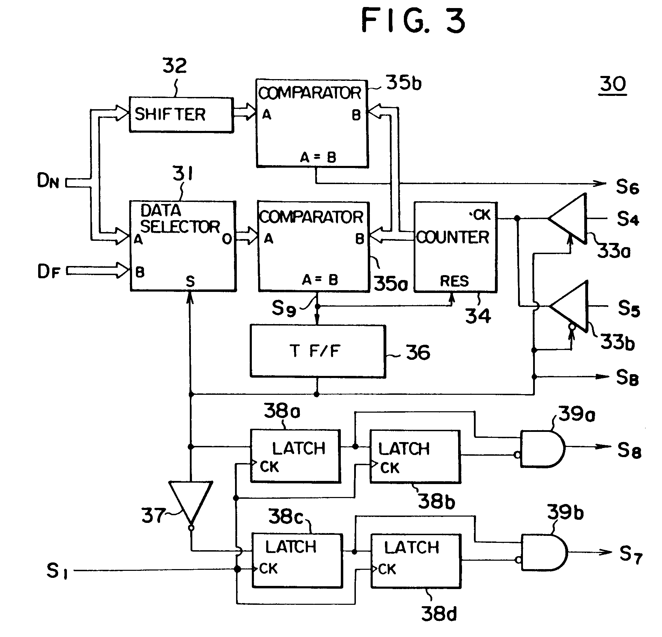

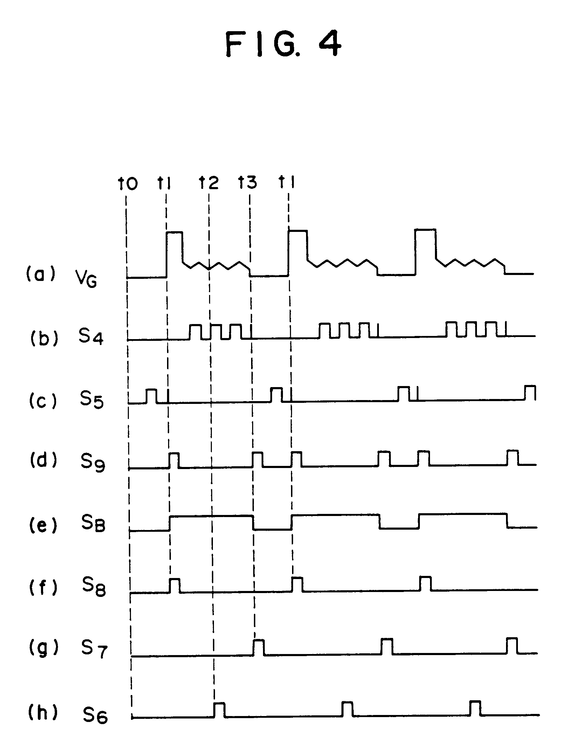

The detailed configuration of the detecting circuit 10, the clock controller 20, the ON/OFF controller 30 and the peak current controller shown in Figure 1 are described referring to Figure 3, Figure 5, Figure 6, Figure 8 and Figure 9, and their operations referring to the timing charts shown in Figure 4, Figure 7 and Figure 10.

First, configuration of the ON/OFF controller 30 is described referring to Figure 3.

The ON/OFF controller 30 consists of data selector 31 which selects and processes two major data of the ON command data DN and the OFF command data DF in response to a select signal described later, shifter 32 which shifts the value of the ON command data DN to half, three state buffers 33a and 33b which output the ON clock signal S4 and the OFF clock signal S5 selectively in response to the base signal SB, counter 34 which counts the selected signal S4 or signal S5, comparator 35a which generates a signal S9 to reset the counter 34 when the count B of the counter 34 equals to the value A of the output data of the data selector 31, comparator 35b which generates an output signal S6 when the count B of the counter 34 equals the value A of the output data of the shifter 32, toggle flip-flop 36 which receives the signal S9 from the comparator 35b at its input, invertor 37 which inverts the output signal of the flip-flop 36 to produce a falling edge from its rising edge, latch circuit 38a and 38b which latch into the rising edge of the flip-flop 36 at timing of the clock signal S1, latch circuit 38c and 38d which latch into the falling edge of the flip-flop 36 at timing of the clock signal S1, logic element 39a which differentiates output signals of the latch circuit 38a and 38b to generate the OFF end signal S7, and logic element 39b which differentiates output signals of the latch circuit 38c and 38d to generate the ON end signal S8.

Operation of the ON/OFF controller 30 is described referring to the timing chart shown in Figure 4. This timing chart illustrates an example of a time relationship between a gap voltage VG, the ON clock signal S4, the OFF clock signal S5, signal S9, the base signal SB, the OFF end signal S7, the ON end signal S8 and the signal S6 when the value of the ON command data DN is 4 and the value of the OFF command data DF is 2. The trace (a) illustrates a gap voltage VG sensed by the gap voltage sensor circuitry 6. Traces (b) and (c) illustrate waveforms on the ON clock signal S4 and the OFF clock signal S5 which are supplied to the three state buffer 33a and 33b, respectively. The trace (d) illustrates the output signal S9 of the comparator 35a which is supplied to the flip-flop 36 and the counter 34. The trace (e) illustrates the base signal SB as the output signal of the flip-flop 36 which is supplied to the data selector 31 and the buffer 33a and 33b and also supplied to the peak current controller 40 and the transistor 8. The traces (f) and (g) illustrate waveforms of the OFF end signal S7 and the ON end signal S8 from the logic element 39a and 39b, respectively. The trace (h) illustrates the output signal S6 of the comparator 35b.

In the timing chart shown Figure 4, the data selector 31 selects the OFF command data at time t0. At time t1 when the counter 34 counts two OFF clock signals, the comparator 35a generates output signal S9 to cause the base signal SB to turn "on". The data selector 31 selects the ON command data in response to the base signal SB of "on" as select signal. At time t2 when the count of the counter 34 equals to the value of output data of the shifter 32, the comparator 35b generates output signal S6. At time t3 when the counter 34 counts four ON clock signals, the comparator 35a generates output signals S9 to cause the base signal SB to turn "off". Then, time t1 to t3 are repeated.

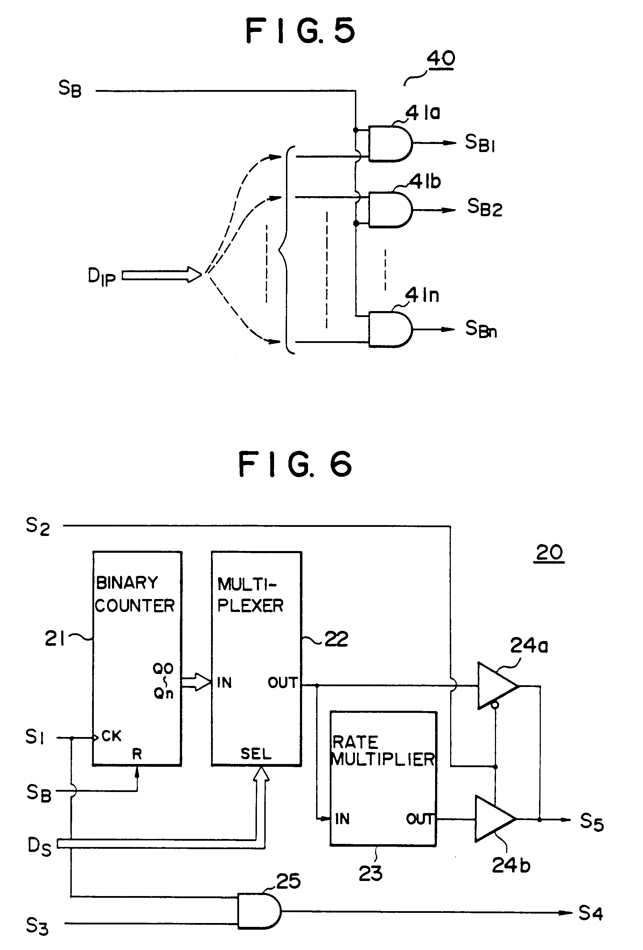

Figure 5 shows the configuration of the peak current controller 40. This peak current controller 40 consists of AND circuit 41a to 41n which supplies output signals SB1, SB2 and SB3 to the bases of the transistors 5a, 5b and 5c, respectively, when receiving both of the base signal SB and the signal based on peak current data DIP. Since three transistors are provided in Figure 1 the AND circuit 41n is the AND current 41c which supplies output signal SB3.

As shown in Figure 6, the clock controller 20 consists of a binary counter 21 which is reset when receiving the clock signal S1 and the base signal of "on", multiplexer 22 which selects the output data from the binary counter 21 according to the data DS, rate multiplexer 23 which divides output signal from the multiplexer 22 to ten, three state buffers 24a and 24b which are selectively operable to supply the OFF clock signal S5 to the ON/OFF controller 30 according to the signal S2, and AND circuit 25 which supplies the ON clock signal S4 to the ON/OFF controller 30 when receiving both the clock signal S1 and the spark signal S3.

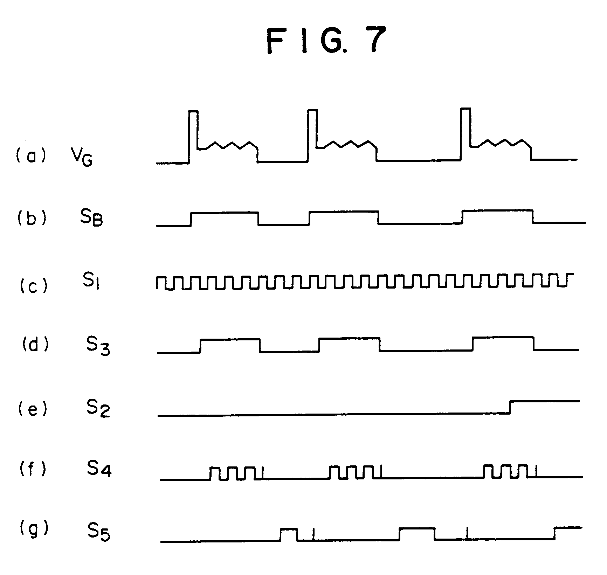

The operation of the clock controller 20 is shown in the timing chart of Figure 7. This timing chart illustrates an example of time relationship between a gap voltage VG, the base signal SB, the clock signal S1, the spark signal S3, the signal S2, the ON clock signal S4 and the OFF clock signal S5. The trace (a) illustrates the gap voltage between the machining electrode 1 and the workpiece 2. When the base signal SB illustrated in trace (b) turns "on", no-load voltage occurs across the gap G resulting in dielectric breakdown and subsequent electric discharging. The trace (c) illustrates the clock signal S1. The traces (d) and (e) illustrates the spark signal S3 indicative of the start of spark discharging and the signal S2 generated in the detecting circuit 10, respectively. The ON clock signal S4 illustrated in trace (f) is the clock signal S1 which generates only when the spark signal S3 is "on". The OFF clock signal S5 illustrated in trace (g) is the clock signal of the frequency calculated according to the data DS and the signal S2 which generates only when the base signal SB is "off".

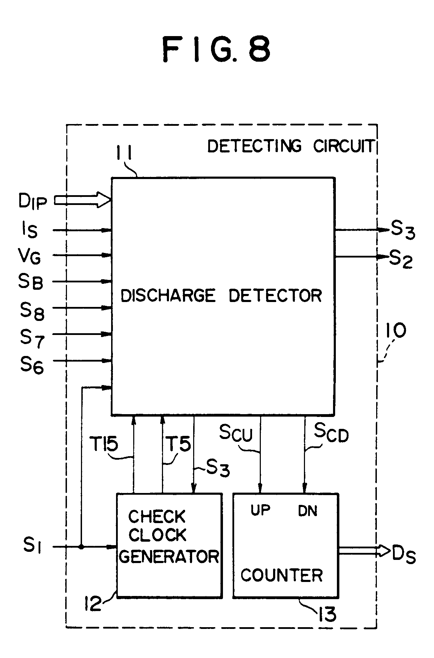

As shown in Figure 8, the detecting circuit 10 consists of the discharge detector 11, the check clock generator 12 and the counter 13. The discharge detector 11 for detecting the discharging state across the gap G receives the peak current data DIP, the signal IS, the gap voltage VG, the base signal SB, the ON end signal S8, the OFF end signal S7, the signal S6 and the clock signal S1 as well as the signal t5 and t15 from the check clock generator 12. The signal IS indicates the current flowing at the point IS. The check clock generator 12 supplies the signal t5 and the signal t15 to the discharge detector 11 according to the spark signal S3 from the discharge detector 11 and the clock signal S1. The signal t5 represents elapse of 5 microseconds after the start of spark discharging and the signal t15 represents elapse 15 microseconds after the start of spark discharging. The counter 13 counts up or counts down responding to the signal SCU and the signal SCD from the discharge detector 11, respectively. Further, the clock controller 20 receives the signal S2 and the spark signal S3 from the discharge detector 11 and the data DS from the counter 13.

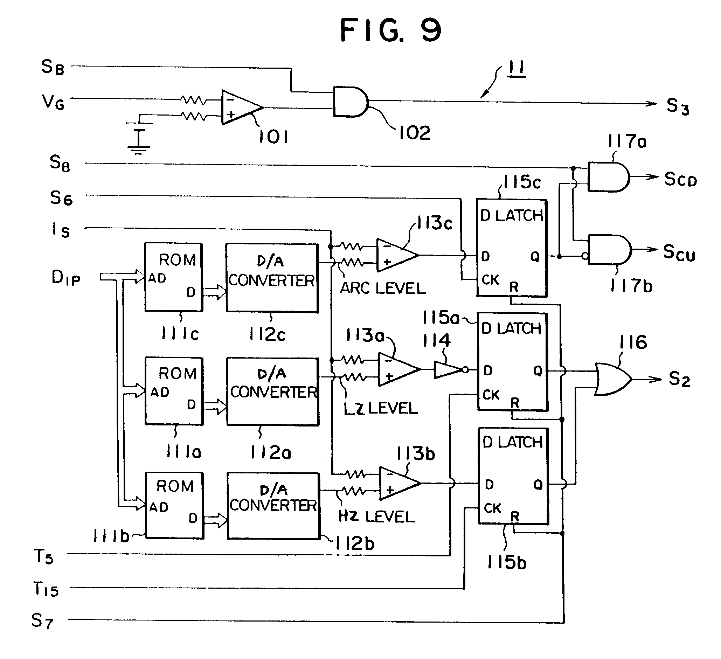

Detailed configuration of the discharge detector 11 is shown in Figure 9. The comparator 101 supplies the significant output signal level, eg level "1" when the gap voltage VG is lower than the reference voltage. The AND circuit 102 generates the spark signal S3 when receiving both the output signal of "1" from the comparator 101 and the base signal SB.

ROMs 111a, 111b and 111c provide the data indicative of voltage value corresponding to the peak current data DIP. D/A converters 112a, 112b and 112c provide the LZ level signal indicative of low impedance, the HZ level signal indicative of high impedance and the ARC level signal based on the data from the ROMs 111a, 111b and 111c, respectively.

The comparator 113a generates "1" when the LZ signal level is lower than the voltage level of the signal IS while the comparator 113b generates "1" when the HZ signal level is lower than the voltage level of the signal IS. The comparator 113c generates "1" when the ARC signal level is lower than the voltage level of the signal IS.

Further, the converter 114 converts output signal of the comparator 113a. The D-latch circuit 115a latches into output signal of the converter 114 with the signal t5 and is reset by the OFF and signal S7. The D-latch circuit 115b latches into output signal of the comparator 113b with the signal t15 and is reset by the OFF and signal S7. The D-latch circuit 115c latches into output signal of the comparator 113c with the signal S6 is reset by the OFF end signal S7. OR circuit 116 makes the logical sum of output from the D-latch circuit 115a and the D-latch circuit 115b to generate the signal S2. The AND circuit 117a generates the signal SCD when receiving both of output of the D-latch circuit 115c and the ON end signal S8, while the AND circuit 117b generates the signal SCU when receiving both of the inverted output of the D-latch circuit 115c and the ON end signal S8.

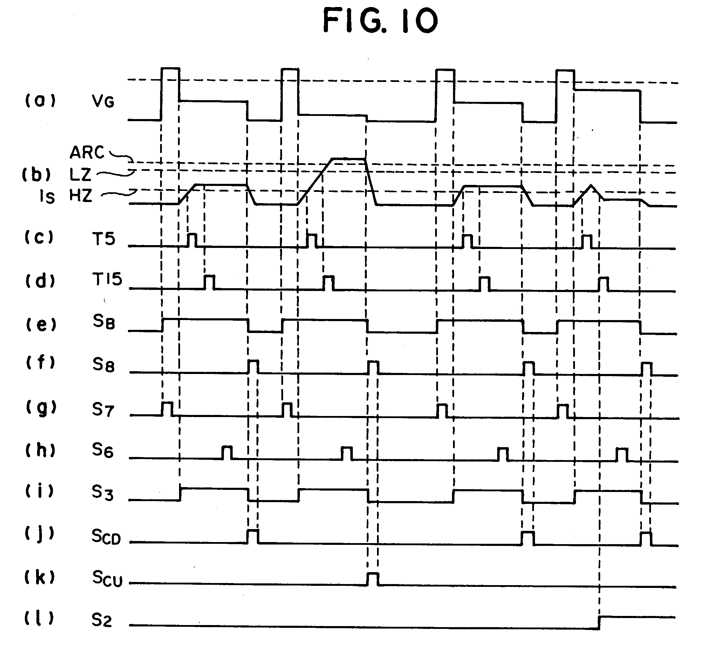

Operation of the discharge detector 11 is described referring to the timing chart shown in Figure 10. The timing chart illustrates an example of time relationship between a gap voltage VG (a), the voltage level (b) of the signal IS, the signal T5 (c), the signal T15 (d), the base signal SB (e), the ON end signal S8 (f), the OFF end signal S7 (g), the signal S6 (h), the spark signal S3 (i), the signal SCD (j), the signal SCU (k) and the signal S2 (l). The voltage level of the signal IS is illustrated in respect to the HZ level, the LZ level and the ARC level. The discharge detector 11 generates the signals illustrated in trace (i) to (l) on the basis of the operation of logic elements shown in Figure 9.

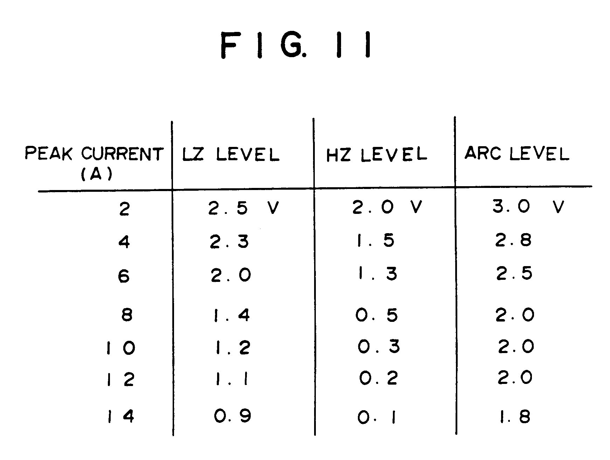

An example of levels for detecting the machining state such as HZ level, LZ level and ARC level which corresponds to peak current data DIP is shown in the table of Figure 11. All levels are based on the experimental results. As peak current on the left of the table increases, the voltage value at respective level are selected in reverse proportion as illustrated.

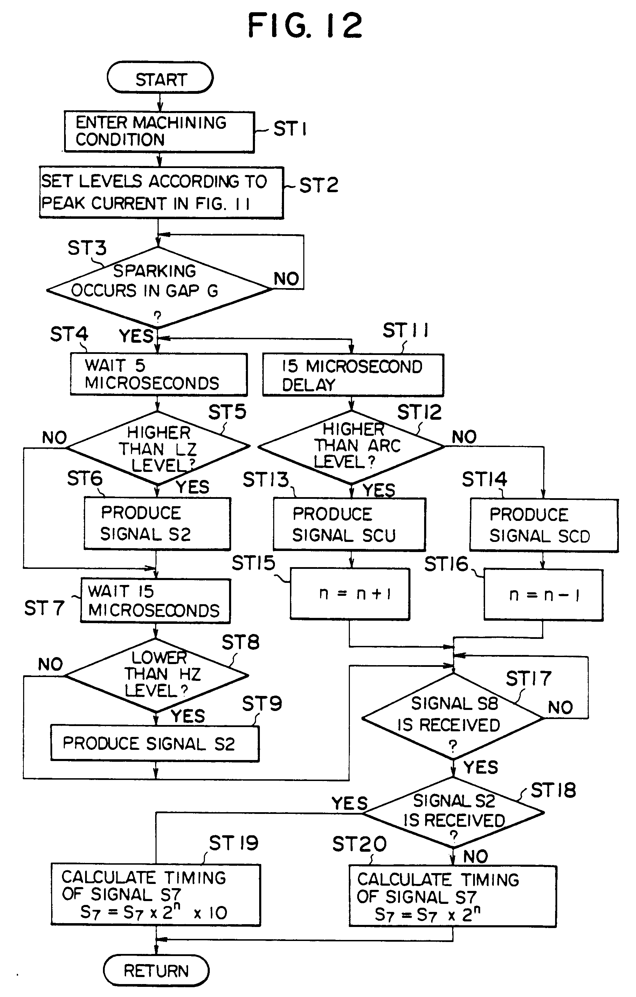

Adaptive control apparatus and a method for controlling discharge current in electric discharge machines is described referring to the flow chart shown in Figure 12. The adaptive controller starts the processing operation and machining conditions including peak current are entered at step ST1. At step ST2, detecting voltage levels are set shown in Figure 11, as an example, according to peak current data DIP.

Then at step ST3, it is decided whether electric discharging has taken place at the gap G between the electrode 1 and the workpiece 2. The steps are looped until the electric discharging takes place. If it is decided that the electric discharging has taken place, processing stops for 5 microseconds at step ST4. Then at step ST5, it is decided whether the voltage level of the signal IS is higher than the LZ level or not. If yes, the signal S2 is generated at step ST6. Then, at step ST7, processing stops for 15 microseconds. If the voltage level of the signal IS is lower than the LZ level, step ST6 is skipped to step ST7 and processing stops for 15 microseconds.

Then, at step ST8, it is decided whether the voltage level of the signal IS is lower than the HZ level or not. If yes, the process proceeds to next step ST9 and the signal S2 is generated. If the voltage level of the signal IS is higher than the HZ level at step ST8 or when the signal S2 is generated at step ST9, the process proceeds to next step ST17.

Generation of the select data DS in the detecting circuit 10 shown in Figure 8 is now described referring to the steps ST11 to ST16.

First, the process stops for 1 microsecond at step ST11. Then, at step ST12 it is decided whether the voltage level of the signal IS is higher than the ARC level or not. If yes, the count up signal SCU is generated at next step ST13. If the voltage level of the signal IS is lower than the ARC level at step ST12, the count down signal SCD is generated at next step ST14. When the signal SCU is generated at step ST13, "n" is counted up by one at the next step ST15. When the signal SCD is generated at step ST13, "n" is counted down by one at the next step ST16. Following respective processing at steps ST8, ST9, ST15 and ST16, the process proceeds to step ST17. At step ST17, it is decided whether the ON end signal S8 is received or not. If it is decided that the ON end S8 is not received, the process loops until the signal S8 is received. When it is determined that the signal S8 is received at the next ST18 it is decided whether the signal S2 is received or not. When it is decided that the signal S2 is received at step ST18, the OFF end signal S7 is generated with the OFF time interval on the basis of the equation "S7=S7 x 2 x 10" at step ST19. When it is decided that the signal S2 is not received at step ST18, the OFF end signal S7 is generated with the OFF time interval on the basis of the equation "S7=S7 x 2" at step ST20. In this way, in Figure 12, operation of the discharge detector 11 shown in Figure 9 is described.

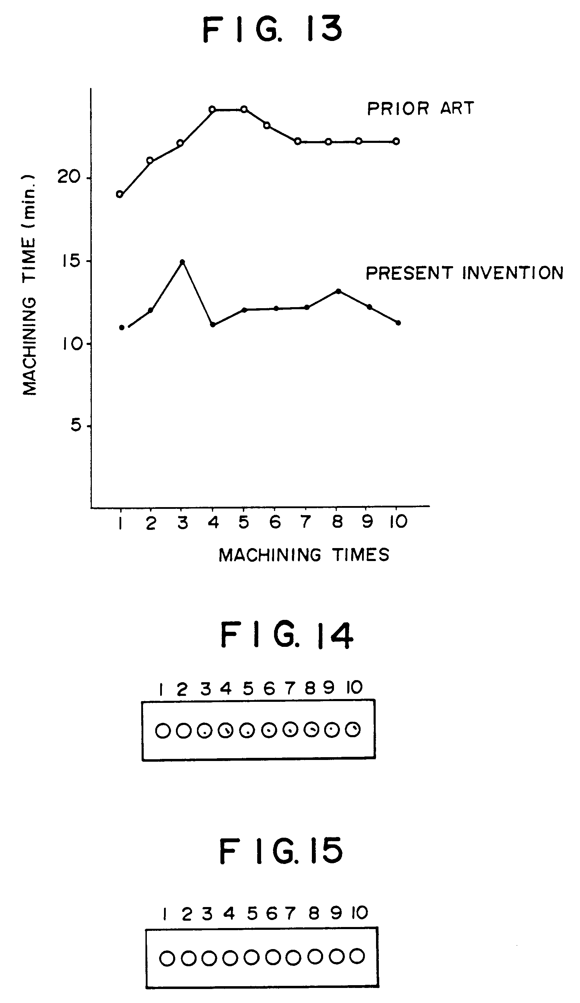

Figure 13 to 15 illustrate the performance of the above described embodiment compared to that of previously available technology.

Experimental data shown in Figure 13 indicates a machining rate in electric discharge machining under the machining condition shown below. Figures 14 and 15 shown the surface condition of a workpiece with the conventional adaptive controller and the adaptive controller of the above embodiment. The machining condition is selected to have an ON time of 80 microseconds, OFF time of 20 microseconds, the peak current data DIP of 4 ampere (A) and the machining voltage applied to the gap of 90 volts (V). Further, the positive polarity is selected on the side of machining electrode (so-called "reverse polarity"). The workpiece is made of rigor, while the tubular machining electrode has a diameter of 5 mm and is made of copper tungsten alloy (CuW) to cut ten 0.5 mm deep holes in a line under the above condition which is apt to induce the unstable discharging state.

As apparent from the machining rate shown in Figure 13 and the surface conditions shown in Figures 14 and 15, the conventional controller takes nearly double the time in any cut out of 10, while exhibiting arc craters, scars and stains at the bottom of cut holes due to unstable machining state. On the other hand, the controller of the present invention reduces conventional machining rate down by about half with little arc craters, scars and stains on the surface of the workpiece indicating excellent performance.

## Claims

1. An adaptive control apparatus for controlling a discharge current through a gap (G) formed between an electrode (1) and a workpiece (2) in an electric discharge machine having a circuit (3,4,5) for applying a voltage pulse having an on-time and an off-time across said gap, characterised by:
a monitoring circuit (7,8,9), including means for generating a detecting current for monitoring the discharge current;
reference level generating means (111,112) for generating at least a first and a second current reference level (LZ,HZ), clock means (12) for generating at least a first and a second reference sampling time (t5,t15) during said voltage pulse; comparing means (113a,113b,113c) connected to said monitoring circuit for comparing the level of said discharge current at least with said first reference level at said first reference time and with said second reference level at said second reference time and for generating respective comparison output signals;
detecting means (10) connected to the comparing means for receiving said comparison output signals and for providing at least a first predetermined output if a first predetermined set of conditions, determined by the comparison output signals, is present, and to provide a second predetermined output if a second predetermined set of conditions is present, and;
control means (20,30), connected to receive said at least first or second predetermined outputs and connected to the voltage pulse applying circuit to increase the off-time when said first output is received and for decreasing said off-time when said second output is received.

2. An adaptive control apparatus as claimed in Claim 1, wherein said comparing means comprises first comparison means (113a) connected to receive said discharge current and the first reference level (L_{Z}) and providing an output if the discharge current is greater than the first reference level to indicate a low impedance across the gap; second comparison means (113b) connected to receive said discharge current and the second reference level (H_{Z}) and providing an output if the discharge current is less than the second reference level, to indicate a high impedance across the gap; and third comparison means (113c) connected to receive said discharge current and a third reference level (ARC) and providing an output if the discharge current is greater than the third reference level, to indicate arcing at the gap; wherein the first predetermined set of conditions is when there is low impedance, high impedance or arcing across the gap.

3. An adaptive control apparatus as claimed in Claim 2, wherein the second predetermined set of conditions is when there is not low impedance, high impedance or arcing across the gap and wherein the off-time is decreased in order to increase a machining rate.

4. An adaptive control apparatus as claimed in Claim 1, wherein said circuit for applying a voltage pulse comprises a power source (3), a current limiting means (4a,4b,4c) and a switching means (5a,5b,5c) in series with said gap.

5. An adaptive control apparatus as claimed in Claim 4, wherein said monitoring circuit comprises a power source (9), a switching means (8) and a current detecting means (7b), wherein the switching means of said monitoring circuit is operable to connect the power source of the monitoring circuit to said gap, whereby said detection current is generated.

6. An adaptive control apparatus as claimed in any one of the preceding claims, including means for detecting the peak current discharged across the gap, memory means (111a, 111b, 111c) storing a plurality of values for each of at least the first and second reference levels, each value being associated with a corresponding value of the peak current, each respective memory means being adapted to output a particular reference level selected from the stored levels dependent on the peak current, which respective reference level is used as the corresponding reference level which is compared against the discharge current.

7. An adaptive control method for controlling a discharge current through a gap (G) formed between an electrode (1) and a workpiece (2) in an electric discharge machine in which a voltage pulse having an on-time and an off-time is applied across said gap, characterized by the steps of:
(a) monitoring a discharge current passed through said gap;
(b) comparing the level of said discharge current at least two predetermined times during said voltage pulse with at least two predetermined reference levels and thereby generating comparison output signals;
(c) selecting whether the discharge current falls into at least a first state or a second state based upon said comparison output signals; and
(d) increasing the off-time when said current is considered to be in said first state and decreasing said off-time when said current is considered to be in said second state.

8. An adaptive control method as claimed in Claim 7, wherein said step of comparing further comprises comparing the level of said discharge current at a first predetermined time to a first predetermined level to determine whether said gap has a low impedance, comparing the level of said discharge current at a second predetermined time to a second predetermined level to determine whether said gap has a high impedance, comparing the level of said discharge current at a third predetermined time to a third predetermined level to determine whether arcing is occurring at said gap, and said discharge current is selected as being in said first state when said gap has said low impedance, said high impedance, or said arcing.

9. An adaptive control method as claimed in Claim 8, wherein said discharge current is selected as being in said second state when said gap does not have said low impedance, said high impedance, or said arcing and said step of increasing decreases said off-time in order to increase a rate of machining.

10. An adaptive control method as claimed in Claim 7, further comprising the step of changing at least two predetermined reference levels in accordance with a peak current discharged across said gap.

## Patentansprüche

1. Adaptives Steuergerät zum Steuern eines Entladestromes über einen Spalt (G) zwischen einer Elektrode (1) und einem Werkstück (2) in einer Funkenerosionsmaschine, mit einem Schaltkreis (3, 4, 5) zum Anlegen eines eine Ein-Zeit und eine Aus-Zeit besitzenden Spannungsimpulses über dem Spalt, **gekennzeichnet durch:**
Einen Überwachungsschaltkreis (7, 8, 9) mit Mitteln zum Erzeugen eines Abtaststromes zum Überwachen des Entladestromes;
einen Bezugspegel erzeugende Mittel (111, 112) zum Erzeugen mindestens eines ersten und eines zweiten Strombezugspegels (LZ, HZ); Taktmittel (12) zum Erzeugen mindestens einer ersten und einer zweiten Bezugabtastzeit (t5, t15) während des Spannungsimpulses; Vergleichermittel (113a, 113b, 113c), die mit dem Überwachungsschaltkreis zum Vergleichen des Pegels des Entladestroms zumindest mit dem ersten Bezugspegel an der ersten Bezugszeit und mit dem zweiten Bezugspegel an der zweiten Bezugszeit verbunden ist, und zum Erzeugen von Vergleichsausgangssignalen;
Abtastmittel (10), die mit den Vergleichermitteln zum Empfangen der Vergleichsausgangssignale und zum Vorsehen zumindest eines ersten vorbestimmten Ausgangssignals dann, wenn ein erster vorbestimmter Satz an Bedingungen, die durch die Vergleichsausgangssignale bestimmt sind, vorhanden ist, und um ein zweites vorbestimmtes Ausgangssignal dann vorzusehen, wenn ein zweiter vorbestimmter Satz an Bedingungen vorhanden ist, verbunden sind, und;
Steuermittel (20, 30), die zum Empfangen mindestens der ersten oder zweiten vorbestimmten Ausgangssignale eingebracht sind und die mit dem den Spannungsimpuls liefernden Schaltkreis verbunden sind, um die Aus-Zeit dann zu erhöhen, wenn das erste Ausgangssignal empfangen wird, und um die Aus-Zeit dann herabzusetzen, wenn das zweite Ausgangssignal empfangen wird.

2. Adaptive Steuervorrichtung nach Anspruch 1, dadurch gekennzeichnet, daß die Vergleichermittel erste Vergleichermittel (113a), die zum Empfangen des Entladestroms und des ersten Bezugspegels (L_{z}) eingebracht sind und die ein Ausgangssignal dann schaffen, wenn der Entladestrom größer ist als der erste Bezugspegel, um eine geringe Impedanz über dem Spalt anzugeben; zweite Vergleichermittel (113b), die zum Empfangen des Entladestromes und des zweiten Bezugspegels (H_{z}) eingebracht sind und ein Ausgangssignal dann schaffen, wenn der Entladestrom kleiner ist als der zweite Bezugspegel, um eine hohe Impedanz über dem Spalt anzugeben; und dritte Vergleichermittel (113c) aufweist, die zum Empfangen des Entladestromes und des dritten Bezugspegels (ARC) eingebracht sind und ein Ausgangssignal dann schaffen, wenn der Entladestrom größer ist als der dritte Bezugspegel, um einen Lichtbogen über dem Spalt anzeigen; wobei der erste vorbestimmte Satz an Bedingungen dann vorliegt, wenn eine geringe Impedanz, eine hohe Impedanz oder ein Lichtbogen über dem Spalt anliegt.

3. Adaptive Steuervorrichtung nach Anspruch 2, dadurch gekennzeichnet, daß der zweite vorbestimmte Satz an Bedingungen dann gegeben ist, wenn eine geringe Impedanz, eine hohe Impedanz oder ein Lichtbogen über dem Spalt nicht vorhanden ist und daß die Aus-Zeit herabgesetzt ist, um die Bearbeitungsrate zu erhöhen.

4. Adaptive Steuervorrichtung nach Anspruch 1, dadurch gekennzeichnet, daß der Schaltkreis zum Anlegen eines Spannungsimpules eine Spannungsquelle (3), strombegrenzende Mittel (4a, 4b, 4c) und Schaltermittel (5a, 5b, 5c) in Reihe mit dem Spalt aufweist.

5. Adaptive Steuervorrichtung nach Anspruch 4, dadurch gekennzeichnet, daß der Überwachungsschaltkreis eine Spannungsquelle (9), Schaltermittel (8) und Stromerfassungsmittel (7b) aufweist, daß die Schaltermittel des Überwachungsschaltkreises betätigbar sind, um die Spannungsquelle des Überwachungsschaltkreise mit dem Spalt zu verbinden, wodurch der Abtaststrom erzeugt wird.

6. Adaptive Steuervorrichtung nach einem der vorhergehenden Ansprüche, dadurch gekennzeichnet, daß sie Mittel zum Abtasten der über dem Spalt vorhandenen Entladestromspitze und Speichermittel (111a, 111b, 111c) zum Speichern einer Vielzahl von Werten für jeden des zumindest ersten oder zweiten Bezugspegels aufweist, wobei jeder Wert einem entsprechenden Wert der Stromspitze zugeordnet ist, wobei das betreffende Speichermittel an den Ausgang eines speziellen Bezugspegels angepaßt ist, der aus den gespeicherten Pegeln in Abhängigkeit von der Stromspitze ausgewählt ist, welcher betreffende Referenzpegel als entsprechender Referenzpegel, der mit dem Entladestrom verglichen wird, verwendet wird.

7. Adaptives Steuerverfahren zum Steuern eines Entladestromes über einem Spalt (G) zwischen einer Elektrode (1) und einem Werkstück (2) in einer Funkenerosionsmaschine, bei welchem ein Spannungsimpuls mit einer Ein-Zeit und einer Aus-Zeit über dem Spalt angelegt wird, gekennzeichnet durch folgende Schritte:
(a) Überwachen eines durch den Spalt fließenden Entladestromes;
(b) Vergleichen des Pegels des Entladestromes zumindest zu zwei vorbestimmten Zeiten während des Spannungsimpulses mit zumindest zwei vorbestimmten Bezugspegeln und dadurch Erzeugen von Vergleichsausgangssignalen;
(c) Auswählen, ob der Entladestrom in zumindest einen ersten Zustand oder einen zweiten Zustand, basierend auf den Vergleichsausgangssignalen, fällt; und
(d) Erhöhen der Aus-Zeit dann, wenn der Strom als in den ersten Zustand fallend betrachtet wird und Herabsetzen der Aus-Zeit dann, wenn der Strom als in den zweiten Zustand fallend betrachtet wird.

8. Adaptives Steuerverfahren nach Anspruch 7, dadurch gekennzeichnet, daß der Schritt des Vergleichens desweiteren das Vergleichen des Pegels des Entladestromes zu einer ersten vorbestimmten Zeit mit einem ersten vorbestimmten Pegel, um zu bestimmen, ob der Spalt eine niedrige Impedanz besitzt; das Vergleichen des Pegels des Entladestromes zu einer zweiten vorbestimmten Zeit mit einem zweiten vorbestimmten Pegel, um zu bestimmen, ob der Spalt eine hohe Impedanz besitzt; das Vergleichen des Pegels des Entladestromes zu einer dritten vorbestimmten Zeit mit einem dritten vorbestimmten Pegel, um zu bestimmen, ob ein Lichtbogen über dem Spalt auftritt, aufweist, und daß der Entladestrom dann, wenn der Spalt eine niedrige Impedanz, die hohe Impedanz oder den Lichtbogen besitztm als sich im ersten Zustand befindet ausgewählt wird.

9. Adaptives Steuerverfahren nach Anspruch 8, dadurch gekennzeichnet, daß der Entladestrom dann, wenn der Spalt die niedrige Impedanz, die hohe Impedanz oder den Lichtbogen nicht aufweist, als sich im zweiten Zustand befindend ausgewählt wird und daß der Schritt des Erhöhens die Aus-Zeit vermindert, um die Bearbeitungsrate zu erhöhen.

10. Adaptives Steuerverfahren nach Anspruch 7, dadurch gekennzeichnet, daß es den Schritt, zumindest zwei vorbestimmte Bezugspegel entsprechend einer Entladestromspitze über dem Spalt zu ändern, aufweist.

## Revendications

1. Appareil de commande adaptative d'un courant de décharge dans un écartement (G) séparant une électrode (1) d'une pièce à usiner (2) dans une machine d'usinage par électro-érosion ayant un circuit (3, 4, 5) pour appliquer dans ledit écartement une impulsion de tension ayant une période active et une période non active, caractérisé par:
un circuit de contrôle (7, 8, 9), comprenant un moyen de génération d'un courant de détection pour contrôler le courant de décharge;
un moyen de génération de niveaux de référence (111, 112) pour générer au moins un premier et un second niveaux de référence de courant (LZ, HZ) , un moyen d'horloge (12) pour générer au moins un premier et un second instants d'échantillonnage de référence (t5, t15) pendant la durée de ladite impulsion de tension; un moyen de comparaison (113a, 113b, 113c) connecté audit circuit de contrôle pour comparer le niveau dudit courant de décharge au moins audit premier niveau de référence, audit premier instant de référence, et audit second niveau de référence, audit second instant de référence, et pour générer des signaux de sortie respectifs de comparaison;
un moyen de détection (10) connecté au moyen de comparaison pour recevoir lesdits signaux de sortie de comparaison et générer au moins une première sortie prédéterminée si un premier jeu de conditions prédéterminé, fixé par les signaux de sortie de comparaison, est présent, et générer une seconde sortie prédéterminée si un second jeu de conditions prédéterminé est présent; et,
un moyen de commande (20, 30) connecté pour recevoir au moins lesdites première ou seconde sorties prédéterminées, et connecté au circuit d'application de l'impulsion de tension pour augmenter la période non active à réception de ladite première sortie et pour diminuer ladite période non active à réception de ladite seconde sortie.

2. Appareil de commande adaptative selon la revendication 1, dans lequel ledit moyen de comparaison comporte un premier moyen de comparaison (113a) connecté pour recevoir ledit courant de décharge et le premier niveau de référence (LZ) et générer un signal de sortie si le courant de décharge est supérieur au premier niveau de référence pour indiquer l'état de basse impédance dans l'écartement (G); un deuxième moyen de comparaison (113b) connecté pour recevoir ledit courant de décharge et le deuxième niveau de référence (HZ) et générer un signal de sortie si le courant de décharge est inférieur au second niveau de référence pour indiquer l'état de haute impédance dans l'écartement (G); et un troisième moyen de comparaison (113c) connecté pour recevoir ledit courant de décharge et un troisième niveau de référence (ARC) et générer un signal de sortie si le courant de décharge est supérieur au troisième niveau de référence pour indiquer la formation d'un arc au niveau de l'écartement (G); dans lequel le premier jeu de conditions prédéterminé correspond à la présence d'une basse impédance, d'une haute impédance ou de la formation d'un arc au niveau de l'écartement (G).

3. Appareil de commande adaptative selon la revendication 2, dans lequel le deuxième jeu de conditions prédéterminé correspond à l'absence d'une basse impédance, d'une haute impédance ou de la formation d'un arc au niveau de l'écartement (G), et dans lequel la période non active est réduite afin d'augmenter la vitesse d'usinage.

4. Appareil de commande adaptative selon la revendication 1, dans lequel ledit circuit d'application d'une impulsion de tension comporte une alimentation (3), un moyen de limitation de courant (4a, 4b, 4c) et un moyen de commutation (5a, 5b, 5c) connectés en série avec ledit écartement (G).

5. Appareil de commande adaptative selon la revendication 1, dans lequel ledit circuit de contrôle comporte une alimentation (9), un moyen de commutation (8) et un moyen de détection de courant (7b), dans lequel le moyen de commutation dudit circuit de contrôle assure la connexion de l'alimentation du circuit de contrôle audit écartement (G), ce qui permet de générer ledit courant de détection.

6. Appareil de commande adaptative selon l'une quelconque des revendications précédentes, comprenant un moyen de détection du courant de crête déchargé dans l'écartement (G), un moyen de mémoire (111a, 111b, 111c) pour mémoriser une pluralité de valeurs correspondant à chacun des premier et deuxième niveaux de référence, chaque valeur étant associée à une valeur correspondante du courant de crête, chaque moyen de mémoire étant respectivement capable de générer un niveau de référence particulier sélectionné parmi les niveaux mémorisés dépendants du courant de crête, lequel niveau de référence sert de niveau de référence correspondant qui est comparé au courant de décharge.

7. Procédé de commande adaptative d'un courant de décharge dans l'écartement (G) séparant une électrode (1) d'une pièce à usiner (2) dans une machine d'usinage par électro-érosion, dans lequel est appliquée dans ledit écartement une impulsion de tension ayant une période active et une période non active, caractérisé par les étapes de:
(a) contrôle d'un courant de décharge traversant ledit écartement (G);
(b) comparaison, à au moins deux instants prédéterminés, du niveau dudit courant de décharge, pendant la durée de ladite impulsion de tension, à au moins deux niveaux de référence prédéterminés, puis génération de signaux de sortie de comparaison;
(c) détermination d'au moins un premier état ou un second état dans lequel tombe le courant de décharge en fonction desdits signaux de sortie de comparaison; et
(d) augmentation de la période non active quand ledit courant est considéré comme étant dans ledit premier état, et diminution de la période non active quand ledit courant est considéré comme étant dans ledit second état.

8. Procédé de commande adaptative selon la revendication 7, dans lequel ladite étape de comparaison comporte en outre la comparaison, à un premier instant prédéterminé, du niveau dudit courant de décharge à un premier niveau prédéterminé, pour déterminer si ledit écartement (G) se trouve en état de basse impédance; la comparaison, à un deuxième instant prédéterminé, du niveau dudit courant de décharge à un deuxième niveau prédéterminé, pour déterminer si ledit écartement (G) se trouve en état de haute impédance; la comparaison, à un troisième instant prédéterminé, du niveau dudit courant de décharge à un troisième niveau prédéterminé, pour déterminer si un arc est en formation au niveau dudit écartement (G); et ledit courant de décharge est déterminé comme étant dans ledit premier état en présence de ladite basse impédance, de ladite haute impédance ou de ladite formation d'un arc au niveau de l'écartement (G).

9. Procédé de commande adaptative selon la revendication 8, dans lequel ledit courant de décharge est déterminé comme étant dans ledit second état en l'absence de ladite basse impédance, de ladite haute impédance ou de ladite formation d'un arc au niveau de l'écartement (G), et ladite étape de diminution diminue la période non active afin d'augmenter la vitesse d'usinage.

10. Procédé de commande adaptative selon la revendication 7, comportant en outre l'étape de modification d'au moins deux niveaux de référence prédéterminés en en fonction du courant de crête déchargé dans ledit écartement (G).
